# EUROPEAN PATENT APPLICATION

(11) **EP 3 241 671 A1**
(43) Date of publication of application: **08.11.2017**
(21) Application number: 16168222.4
(22) Date of filing: 04.05.2016
(51) Int. Cl.: B30B 9/26, B30B 15/04, F16M 13/00, C02F 11/12

(54) **ASSEMBLY FOR A DEWATERING APPARATUS AND DEWATERING APPARATUS COMPRISING SUCH AN ASSEMBLY**

(71) Applicant: Alfa Laval Corporate AB, 221 00 Lund (SE)
(72) Inventor: MADSEN, Morten, DK-3500 VÆRLØSE (DK)
(74) Representative: Alfa Laval Attorneys

(57) **Abstract**

An assembly (4) for a dewatering apparatus (2) and a dewatering apparatus comprising such an assembly are provided. The assembly comprises a support structure (6) and an elongate liquid-permeable drum (8) arranged to be enclosed by the support structure. The support structure comprises a number of bars (54) extending along each other and along a longitudinal center axis (c2) of the support structure. The bars are arranged to extend along a longitudinal center axis of the drum (c1). The assembly is characterized in that the support structure further comprises a plurality of intermediate rods (46), each intermediate rod extending obliquely between, and connecting, two adjacent ones of the bars. Further, the support structure is arranged to be non-permanently coupled to the drum to lock the drum to the support structure in a rotational direction.

## Description

### Technical field

The invention relates to an assembly for a dewatering apparatus comprising a support structure and an elongate liquid permeable drum arranged to be enclosed by the support structure. The invention also relates to a dewatering apparatus comprising such an assembly.

### Background art

In connection with, for example, conventional waste water treatment, sludge is produced. Sludge typically consists of suspended organic and inorganic solids as well as dissolved solids in a large amount of water. To prepare the sludge for further treatment it is normally fed to a dewatering apparatus for removal of water and concentration of the solids content. Normally, removal of as much water as possible from the sludge is desired.

Different kinds of dewatering apparatuses are known, the screw press being one of them. A known screw press comprises a screw and a screen or filter, in the form of a drum with a liquid-permeable wall, inside which the screw is arranged. Sludge is fed into a first end of the drum and through the drum by means of the screw during gradual dewatering. More particularly, inside the drum the sludge is separated into liquid leaving the drum through its wall and solids fed to the other, second end of, and eventually out of, the drum. Thus, the sludge will become increasingly viscous towards the second end of the drum. To feed the sludge through the drum, the screw is rotated by means of a motor. To prevent clogging of the drum, windings of the screw are provided with brushes to clean an inside of the drum.

During operation of the screw press, the drum is subjected to high stress as a result of the sludge as well as the brushes being pressed against the inside of the drum by the rotating screw. Thus, to prevent breakage of the drum, the screw press further comprises a support structure of bars extending longitudinally along the drum. The bars are fixed to the drum and arranged to support the drum by absorbing the stress resulting from the sludge and the brushes. In order for the support structure to be able to withstand the stress, the bars must be relatively sturdy. Further, especially for a larger screw press, an additional outer support structure may be required for torque absorption. This makes the screw press material demanding, bulky and heavy.

### Summary

An object of the present invention is to provide an assembly comprising a liquid-permeable drum and a support structure for a dewatering apparatus that at least partly eliminate potential limitations of prior art. The basic concept of the invention is to provide a support structure capable of absorbing a relatively high torque such as to remove the need for an additional outer support structure. Another object of the present invention is to provide a dewatering apparatus comprising such an assembly. The assembly and the dewatering apparatus for achieving the objects above are defined in the appended claims and discussed below.

An assembly for a dewatering apparatus according to the present invention comprises a support structure and an elongate liquid-permeable drum arranged to be enclosed by the support structure. The support structure comprises a number of bars extending along each other and along a longitudinal center axis of the support structure. The bars are arranged to extend along a longitudinal center axis of the drum. The assembly is characterized in that the support structure further comprises a plurality of intermediate rods. Each intermediate rod extends obliquely between, and connects, two adjacent ones of the bars. Further, the support structure is arranged to be non-permanently coupled to the drum to lock the drum to the support structure in a rotational direction.

In that the support structure comprises intermediate rods extending askew between the bars, i.e. both along the longitudinal center axis, and in a circumferential direction, of the drum, the capacity of the support structure to absorb stress, and torque in particular, increases considerably as compared to if the support structure had lacked the intermediate rods, or if the intermediate rods had extended straight between the bars. The inventive support structure may thus be stronger and more rigid than the above described known support structure, even with less sturdy bars than the bars of the known support structure. Thus, the inventive assembly enables a dewatering apparatus that doesn't demand an additional outer support structure for torque take-up. Accordingly, the assembly as well as the dewatering apparatus can be made much lighter, less bulky and less material demanding.

By non-permanent coupling of the support structure to the drum is meant releasable coupling which enables repeated coupling and non-destructive uncoupling of the support structure and the drum. This facilitates cleaning and maintenance of the assembly and a dewatering apparatus comprising the assembly.

The drum could be arranged to be slid into, and out of, the support structure along the longitudinal center axes of the drum and support structure. However, according to one embodiment of the invention the support structure comprises at least two support structure sections which are non-permanently connectable and non-destructively disconnectable lengthwise of the support structure. Thereby, the drum may be enfolded by, and released from, the support structure in a fast and space-efficient way, which is particularly advantageous when the service area is limited and/or the drum and support structures are large, and in particular long.

The drum may be integrally formed. However, according to one embodiment of the invention the drum comprises at least two drum sections which are non-permanently connectable and non-destructively disconnectable lengthwise of the drum. Such a dividable drum may facilitate cleaning and maintenance of the assembly and a dewatering apparatus comprising the assembly.

According to one embodiment of the invention, each of the drum sections comprises two section rails extending along each other and a wall portion extending between the section rails. Further, each of the section rails of each of the drum sections is arranged to be coupled to a respective one of the section rails of an adjacent one of the drum sections. Furthermore, each pair of coupled section rails is comprised in a distance means which protrudes from an outer surface of a wall of the drum comprising the wall portions and extends along the longitudinal center axis of the drum. According to another embodiment of the invention, which may be relevant also for an integrally formed drum, the drum comprises a wall and distance means protruding from an outer surface of the wall and extending along the longitudinal center axis of the drum. In connection with both embodiments the distance means may extend along a complete length, or only part of the length, of the drum.

The distance means may be arranged to engage with the support structure, the drum being separated from the support structure in between said distance means. Such an embodiment may involve a limited contact between the support structure and the drum, resulting in a decreased risk of clogging of the drum.

The assembly may be such that two adjacent ones of the support structure sections are arranged to be connected to each other in line with one of the distance means. Further, said one of the distance means may be arranged to be fixed between said two adjacent ones of the support structure sections. Thereby, the support structure may be coupled to, and uncoupled from, the drum "automatically" in connection with connection/disconnection of the support structure sections, without the need for specific coupling means.

As an example, the intermediate rods may serve as coupling means. Accordingly, a first set of the intermediate rods extending from one of the bars on one side of the bar, and a second set of the intermediate rods extending from said one of the bars on an opposite side of the bar, may extend beyond an inside of said one of the bars. Further, one of the distance means of the drum may be arranged to be fixed between the first and second sets of the intermediate rods on the inside of said one of the bars. Such an embodiment enables a reliable and mechanically straightforward coupling and uncoupling of the support structure to/from the drum.

The support structure may comprise a number of support structure modules, e.g. the same number of support structure modules as the number of bars. Each support structure module may comprise two edge rods extending along each other and being connected by a respective set of the intermediate rods. Each of the edge rods of each of the support structure modules may be arranged to be coupled to a respective one of the edge rods of an adjacent one of the support structure modules. Further, each of said bars may comprise a respective one of the edge rods of two adjacent ones of the support structure modules. Such an embodiment may enable a support structure that is relatively easy to manufacture. Thus, the above mentioned support structure sections may comprise one or more support structure modules. The support structure modules may be permanently or non-permanently attached to each other.

The assembly may be such that third and fourth sets of the intermediate rods extend between first and second ones of the bars, an angle α, measured from each intermediate rod of the third set of intermediate rods to the first bar in a clockwise direction, being less than 90 and larger than 0 degrees, and an angle β, measured from each intermediate rod of the fourth set of intermediate rods to the first bar in a clockwise direction, being less than 180 and larger than 90 degrees. Thereby, the capacity of the support structure to absorb stress, and torque in particular, is increased independent upon "the direction" of the stress, e.g. independent upon whether a screw arranged inside the drum rotates in a clockwise or in a counter-clockwise direction.

The intermediate rods in the first, second, third and fourth sets of intermediate rods may be different or partially or completely the same intermediate rods.

At least one of the intermediate rods of the third set of intermediate rods may cross a respective one of the intermediate rods of the fourth set of intermediate rods. Thereby, the stress absorption capacity of the support structure may be optimized.

The support structure may further comprise a number of end rods. Each of the end rods may extend between, and connect, a respective end of two adjacent ones of the bars. The support structure may be coupled to other components of a dewatering apparatus comprising the assembly via these end rods so as to keep the support structure in place.

The end rods may be straight, and a smallest angle between two adjacent ones of the end rods may be smaller than 180 degrees. This may result in a support structure with a polygonal cross section which is easy to manufacture.

Above, the expressions "one of the bars", "two adjacent ones of the bars" and "first and second ones of the bars" are used to describe different embodiment. These bars may be the same or different bars.

A dewatering apparatus according to the invention comprises an assembly as described above.

### Brief description of the drawings

The invention will now be described in more detail with reference to the appended schematic drawings, in which
Fig. 1 schematically illustrates, in perspective, a dewatering apparatus comprising an assembly according to the present invention,
Fig. 2 schematically illustrates, in perspective, a first half of the assembly of Fig. 1,
Fig. 3 is an enlargement of an encircled portion B of Fig. 2,
Fig. 4 schematically illustrates, in perspective, a second half of the assembly of Fig. 1,
Fig. 5 schematically illustrates, in perspective, a module of a drum of the assembly of Fig. 1,
Fig. 6 is a schematic front view of a section of a support structure of the assembly of Fig. 1, and
Fig. 7 is a perspective view of a module of the support structure of Fig. 6.

### Detailed description

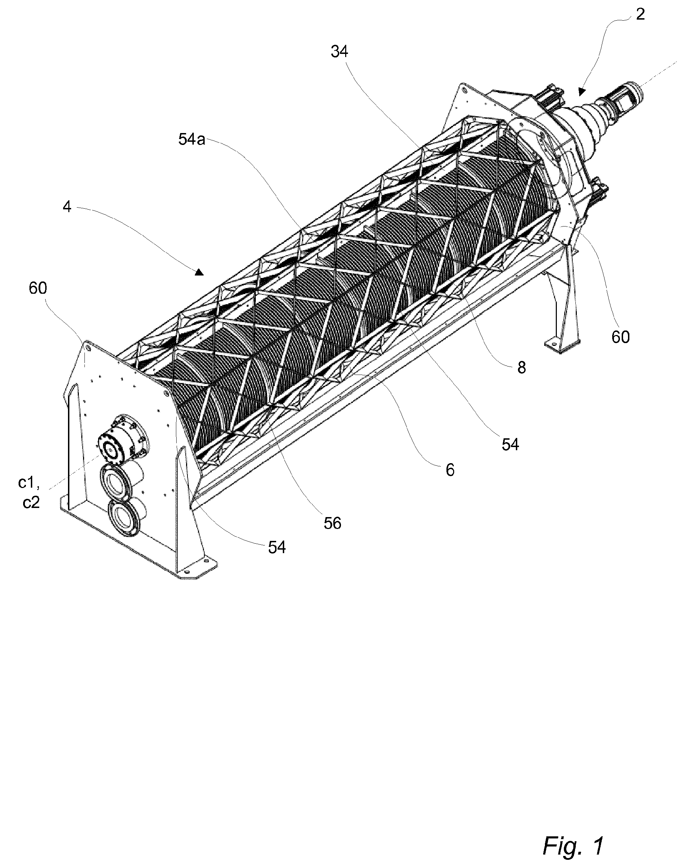

In Fig. 1 a dewatering apparatus in the form of a screw press 2 is shown. It comprises an assembly 4 including a support structure 6 and an elongate, liquid-permeable, essentially circular-cylindrical drum 8 surrounded by the support structure. Except as regards the assembly 4, the screw press 2 is designed as a conventional screw press, the construction and function of which were briefly described by way of introduction and are well-known. Therefore, the following description will be focused on what is relevant for the invention, which is the assembly 4.

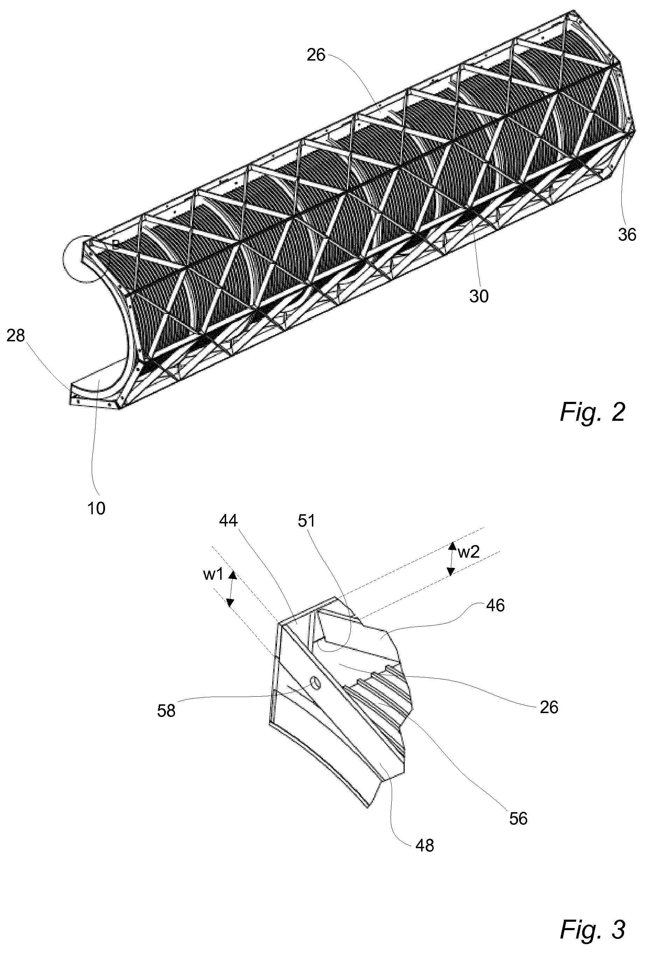

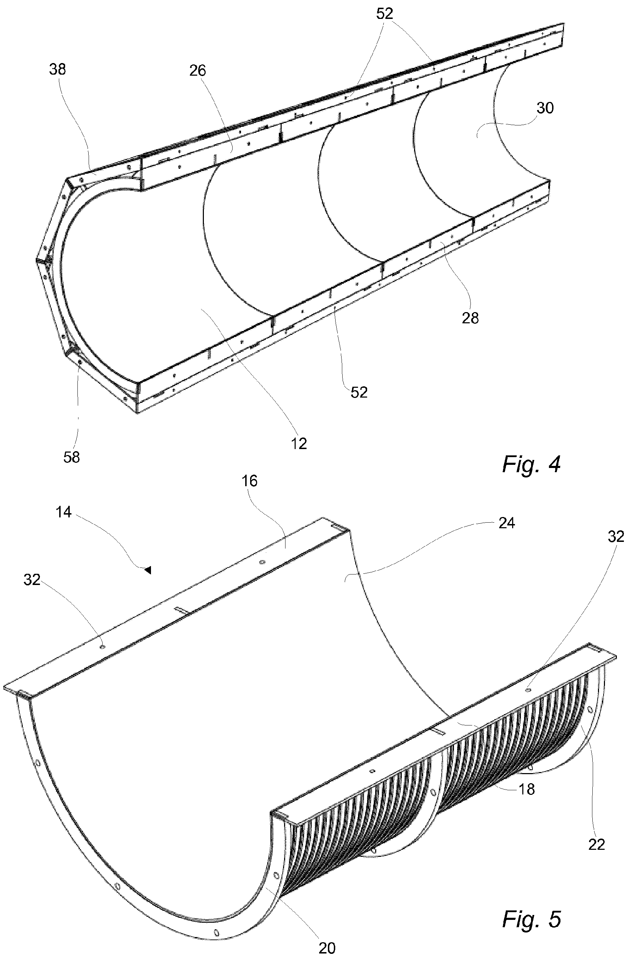

The assembly is illustrated in more detail in Figs. 2-7. Starting with the drum 8, with particular reference to Figs. 2, 4 and 5, it is lengthwise dividable, i.e. dividable along a longitudinal center axis c1 of the drum (Fig. 1). More particularly, the drum 8 is dividable in half into first and second half-cylindrical drum sections 10 and 12, respectively. Each of the first and second drum sections 10 and 12 comprises four half-cylindrical drum modules 14 (Fig. 5). Each of the drum modules 14 comprises first and second parallel section rails 16 and 18, respectively, extending along the longitudinal center axis c1 (Fig. 1) of the drum, first and second parallel module rails 20 and 22, respectively, extending half way around the longitudinal center axis of the drum, and a wall portion 24 extending between the first and second section rails and first and second module rails. The section rails and module rails all protrude from an outer surface of the wall portion, in a radial direction of the drum.

To connect two of the drum modules 14 to each other, their first section rails 16 are welded together along a respective short side, their second section rails 18 are welded together along a respective short side, and a long side of the first module rail 20 of one of the drum modules is welded to a long side of the second module rail 22 of the other one of the drum modules. By connecting the drum modules four and four in the above described way, the first and second drum sections 10 and 12, which are essentially identical, are formed. Each of the drum sections 10, 12 comprises first and second section rails 26 and 28, respectively, and a wall portion 30 extending between the section rails. To form the drum 8, the first and second section rails 26 and 28 of the first drum section 10 are connected to the first and second rail sections 26 and 28, respectively, of the second drum section 12, by means of bolts extending through holes 32 in the section rails and nuts. As will be further discussed below, the pairwise engaging first rail sections 26 form a first distance means 34 (Fig. 1) while the pairwise engaging second rail sections 28 form an opposite second distance means (not visible in the figures).

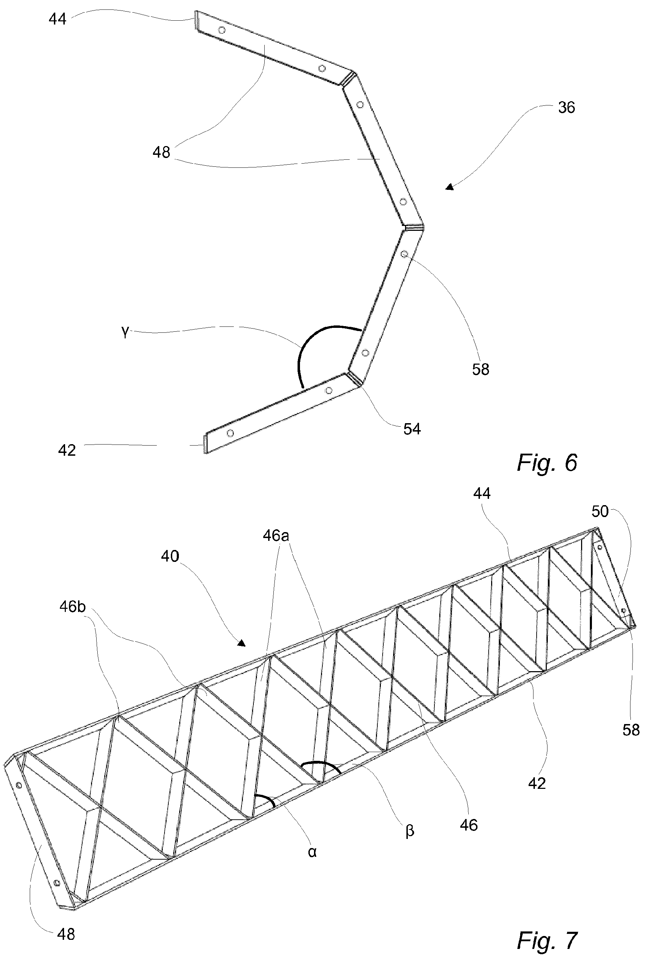

Turning now to the support structure 6, with particular reference to Figs. 2, 4, 6 and 7, it is lengthwise dividable, i.e. dividable along a longitudinal center axis c2 of the support structure (Fig. 1), which coincides with the longitudinal center axis c1 of the drum. More particularly, the support structure 6 is dividable in half into first and second support structure sections 36 and 38, respectively. Each of the first and second support structure sections 36 and 38 comprises four elongate support structure modules 40 (Fig. 7).

Each of the support structure modules 40 comprises first and second edge rods 42 and 44, respectively, extending along each other and along the longitudinal center axis c2 (Fig. 1) of the support section, and a plurality of intermediate rods 46 extending obliquely between the first and second edge rods. More particularly, half (third set in the claims) of the intermediate rods 46 between the edge rods 42 and 44, the intermediate rods 46a, extend such that an angle α measured from the intermediate rod to the first edge rod 42 in a clockwise direction is 45 degrees. Further, the other half (fourth set in the claims) of the intermediate rods 46 between the edge rods 42 and 44, the intermediate rods 46b, extend such that an angle β measured from the intermediate rod to the first edge rod 42 in a clockwise direction is 135 degrees. Furthermore, each of the intermediate rods 46a crosses a respective one of the intermediate rods 46b half way between the first and second end rods 42 and 44. Accordingly, each of the intermediate rods is provided with center slit (not illustrated), extending from a long side, for reception of the crossing intermediate rod. Also, each of the support structure modules 40 comprises a first end rod 48 connecting a respective first end of, and extending perpendicular to, the edge rods 42 and 44, and a second end rod 50 connecting a respective second end of, and extending perpendicular to, the edge rods 42 and 44.

As is illustrated in Fig. 3, a width w1 of the intermediate rods 46 and the end rods 48 and 50 exceeds a width w2 of the edge rods 42 and 44 such that the intermediate rods and the end rods extend beyond an inside 51 of the edge rods 42 and 44.

The support structure modules 40 are welded together four and four, first end rod 42 against second end rod 44, to form the first and second support structure sections 36 and 38, which are essentially identical. As is clear from the figures, the edge, intermediate and end rods are all straight but cut and angled in relation to each other for adaption to a support structure having an octagonal cross section. Accordingly, as is clear especially from Fig. 6, the end rods 42 and 44 do not have short sides which are perpendicular to the long sides. Instead, the edge rods are cut such that a smallest angle γ between two adjacent ones of the edge rods of two adjacent ones of the support structure modules 40 is 135 degrees.

To form the support structure 6 the free (non-welded and outermost) first edge rod 42 of the first support structure section 36 is connected to the free second edge rod 44 of the second support structure section 38, and the free second edge rod 44 of the first support structure section 36 is connected to the free first edge rod 42 of the second support structure section 38. The connections are made by means of bolts extending through holes 52 in the free first and second edge rods (Fig. 4) and nuts. The resulting support structure 6 will comprise eight pairs of connected edge rods. Each rod pair forms a bar 54 defining an edge of an octagonal cylinder, i.e. a corner of an octagonal cross section of the support structure, which cross section is taken perpendicular to the longitudinal center axis c2 of the support structure 6. In the support structure, each of the bars 54 will be connected to the adjacent bar on each side by respective first and second sets of the intermediate rods 46 and the end rods 48, 50 extending from opposite sides of each of the bars.

The support structure 6 is assembled around the drum 8 such that the first support structure section 36 encloses the first drum section 10 and the second support structure section 38 encloses the second drum section 12. Thereby, the first and second support structure sections 36, 38 are connected to each other in line with the first distance means 34 and the second distance means. More particularly, the first and second distance means extend sufficiently from a wall 56 of the drum 8, which wall is formed by the wall portions 30 of the first and second drum sections 10, 12, so as to be clamped between the first and second support structure sections 36 and 38. Looking more closely at the first distance means 34, this will be aligned with the bar 54a when the support structure 6 is properly assembled around the drum 8 (Fig. 1). More particularly, as is illustrated in Fig. 3, when the drum 8 is properly enclosed by the support structure 6, the first rail section 26 of the first drum section 10 will be aligned with the second edge rod 44 of the bar 54a. Further, the intermediate rods 46 extending from the second edge rod 44 will contact, with the portion extending beyond the inside 51 of the second edge rod 44, i.e. beyond an inside of the bar 54a, the first rail section 26 of the first drum section 10. Similarly, not illustrated in detail, the first rail section 26 of the second drum section 12 will be aligned with the first edge rod 42 of the bar 54a. Further, the intermediate rods 46 extending from the first edge rod 42 will contact, with the portion extending beyond the inside of the second edge rod 42, i.e. beyond an inside of the bar 54a, the first rail section 26 of the second drum section. Thus, when the first and second support structure sections 36, 38 are connected, the first distance means 34 will be pinched between the intermediate rods 46 extending from the bar 54a, on the inside of the bar 54a. Thus, when the support structure 6 is closed around the drum 8, the support structure and the drum are connected and the drum is rotationally locked to the support structure. In between the first and second distance means, the drum is separated from the support structure.

The assembly 4, comprising the drum and the support structure, is secured to the rest of the screw press 2 by means of bolts extending through holes 58 in the end rods 48 and 50 and into end plates 60 (Fig. 1) of the screw press 2.

If needed, e.g. for maintenance and/or cleaning, the support structure 6 can be disconnected from the end plates 60 and from the drum 8 by disconnection of the first and second support structure sections. Also the drum sections can be disconnected from each other if desired. Then, the drum and the support sections can be reassembled to make the screw press ready for operation.

The above described embodiment of the present invention should only be seen as an example. A person skilled in the art realizes that the embodiment discussed can be varied and combined in a number of ways without deviating from the inventive conception.

As an example, the drum, just like the support structure, may be integrally formed instead of being formed of connected drum sections and support structure sections, respectively. Further, the drum sections, just like the support structure sections, may be integrally formed instead of being formed of connected drum modules and support structure modules, respectively. Furthermore, the drum modules, drum sections, support structure modules and support structure sections may be permanently connected, non-permanently connected or a mixture thereof.

The number of drum sections, just like the number of support structure sections, need not be two but can be more or less than two. Similarly, the number of drum modules in each drum section, just like the number of support structure modules in each support structure section, need not be four but can be more or less than four.

The drum need not be circular-cylindrical but may have any suitable shape, such as a tapered or oval shape.

The support structure need not have an octagonal cross section but may have any cross section, such as a hexagonal or a circular cross section. Further, the support structure need not have a continuous cross section along its longitudinal center axis but may be tapered. Also, two or more of the intermediate rods and/or the end rods may be integrally formed so as to connect more than two of the bars.

According to the embodiment above the drum and the support structure are connected only on opposite sides of the drum, i.e. along the first and second distance means which are separated by 180 degrees. In between the distance means the drum and the support structure are separated by a small distance. Naturally, with different designs of the drum and/or the support structure, the size of the contact areas and/or the number of contact areas between the drum and the support structure may be different.

The intermediate rods need not be provided with a respective center slit to enable crossing with another intermediate rod. According to an alternative embodiment, half of the intermediate rods are integrally formed while the other half comprises two portions being welded to opposite sides of respective ones of the integrally formed intermediate rods.

In the above disclosed embodiment the drum is connected to the support structure only by each of the distance means being clamped between the intermediate rods extending from opposite sides of two of the bars. Thereby, the drum is locked to the support structure in a rotational direction. Thus, of course depending on how hard the distance means are clamped between the intermediate rods, the drum is "floatingly" arranged inside the support structure in a longitudinal direction. This design may prevent that the drum is damaged if the drum should move in relation to the support structure as a result of the pressure from the sludge and the brushes on the inside of the drum. The distance means need not be arranged to be clamped between the intermediate rods but could instead be arranged to be clamped between the two edge rods of a bar. Further, naturally, the drum could be connected to the support structure in other ways than by clamping, both by means locking, completely or partly, and by means not locking, the drum to the support structure in the longitudinal direction.

The inventive assembly could be used in connection with other types of dewatering apparatuses than screw presses.

It should be stressed that a description of details not relevant to the present invention has been omitted and that the figures are just schematic and not drawn according to scale. It should also be said that some of the figures have been more simplified than others. Therefore, some components may be illustrated in one figure but left out in another figure. Finally, as used herein, when one component is said to be connected to another component, the connection may be direct as well as indirect.

## Claims

1. An assembly (4) for a dewatering apparatus (2) comprising a support structure (6) and an elongate liquid-permeable drum (8) arranged to be enclosed by the support structure, the support structure comprising a number of bars (54) extending along each other and along a longitudinal center axis (c2) of the support structure and arranged to extend along a longitudinal center axis of the drum (c1), **characterized in that** the support structure further comprises a plurality of intermediate rods (46), each intermediate rod extending obliquely between, and connecting, two adjacent ones of the bars, and **in that** the support structure is arranged to be non-permanently coupled to the drum to lock the drum to the support structure in a rotational direction.

2. An assembly (4) according to claim 1, wherein the support structure (6) comprises at least two support structure sections (36, 38) which are non-permanently connectable and non-destructively disconnectable lengthwise of the support structure.

3. An assembly (4) according to claim 2, wherein the drum (8) comprises at least two drum sections (10, 12) which are non-permanently connectable and non-destructively disconnectable lengthwise of the drum.

4. An assembly (4) according to claim 3, wherein the drum sections (10, 12) each comprises two section rails (26, 28) extending along each other and a wall portion (30) extending between the section rails, each of the section rails of each of the drum sections being arranged to be coupled to a respective one of the section rails of an adjacent one of the drum sections, each pair of coupled section rails being comprised in a distance means (34) protruding from an outer surface of a wall (56) of the drum (8) comprising the wall portions and extending along the longitudinal center axis (c1) of the drum.

5. An assembly (4) according to any of claims 2-3, wherein the drum (8) comprises a wall (56) and distance means (34) protruding from an outer surface of the wall and extending along the longitudinal center axis (c1) of the drum.

6. An assembly (4) according to any of claims 4 or 5, wherein said distance means (34) are arranged to engage with the support structure (6), the drum (8) being separated from the support structure in between said distance means.

7. An assembly (4) according to any of claims 4-6, wherein two adjacent ones of the support structure sections (36, 38) are arranged to be connected to each other in line with one of the distance means (54).

8. An assembly (4) according to claim 7, wherein said one of the distance means (54) is arranged to be fixed between said two adjacent ones of the support structure sections (36, 38).

9. An assembly (4) according to any of claims 4-8, wherein a first set of the intermediate rods (46) extending from one of the bars (54) on one side of the bar, and a second set of the intermediate rods extending from said one of the bars on an opposite side of the bar, extend beyond an inside (51) of said one of the bars, one of the distance means (34) of the drum (8) being arranged to be fixed between the first and second sets of the intermediate rods (46) on the inside of said one of the bars.

10. An assembly (4) according to any of the preceding claims, wherein the support structure (6) comprises a number of support structure modules (40), each support structure module comprising two edge rods (42, 44) extending along each other and being connected by a respective set of the intermediate rods (46), each of the edge rods of each of the support structure modules being arranged to be coupled to a respective one of the edge rods of an adjacent one of the support structure modules, each of said bars (54) comprising a respective one of the edge rods of two adjacent ones of the support structure modules (36, 38).

11. An assembly (4) according to any of the preceding claims, wherein third and fourth sets of the intermediate rods (46a, 46b) extend between first and second ones of the bars (54), an angle α measured from each intermediate rod (46a) of the third set of intermediate rods to the first bar in a clockwise direction being less than 90 and larger than 0 degrees, and an angle β measured from each intermediate rod (46b) of the fourth set of intermediate rods to the first bar in a clockwise direction being less than 180 and larger than 90 degrees.

12. An assembly (4) according to claim 11, wherein at least one of the intermediate rods (46a) of the third set of intermediate rods crosses a respective one of the intermediate rods (46b) of the fourth set of intermediate rods.

13. An assembly (4) according to any of the preceding claims, wherein the support structure (6) further comprises a number of end rods (48, 50), each of the end rods extending between, and connecting, a respective end of two adjacent ones of the bars (54).

14. An assembly (4) according to claim 13, wherein the end rods (48, 50) are straight, a smallest angle γ between two adjacent ones of the end rods being smaller than 180 degrees.

15. A dewatering apparatus (2) comprising an assembly (4) according to any of the preceding claims.
